# EUROPEAN PATENT SPECIFICATION

(11) **EP 1 464 878 B1**
(45) Date of publication and mention of the grant of the patent: **13.05.2009**
(21) Application number: 02790782.3
(22) Date of filing: 16.12.2002
(51) Int. Cl.: F16J 15/10, B32B 15/06, B32B 7/12

(54) **METAL GASKET MATERIAL SHEET**
METALLDICHTUNGSMATERIALBAHN
FEUILLE METALLIQUE DE MATERIAU D'ETANCHEITE

(30) Priority: 18.12.2001 JP 2001385073
(43) Date of publication of application: 06.10.2004
(73) Proprietor: NIPPON LEAKLESS INDUSTRY Co., Ltd., Minato-ku, Tokyo 105-0004 (JP); HONDA GIKEN KOGYO KABUSHIKI KAISHA, Minato-ku, Tokyo 107-8556 (JP)
(72) Inventor: AKIYOSHI, K., c/o NIPPON LEAKLESS INDUS. CO. LTD, Saitama-shi, Saitama 336-0931 (JP); MISUMI, N., c/o NIPPON LEAKLESS INDUS. CO. LTD, Saitama-shi, Saitama 336-0931 (JP); MITSUYAMA, N., c/o NIPPON LEAKLESS INDUS. CO. LTD, Saitama-shi, Saitama 336-0931 (JP); MURAKAMI, Y., c/o HONDA GIJUTSU KENKYUSHO, Wako-shi, Saitama 351-0193 (JP); KATSURAI, T., c/o HONDA GIJUTSU KENKYUSHO, Wako-shi, Saitama 351-0193 (JP); TABATA, M., c/o HONDA GIJUTSU KENKYUSHO, Wako-shi, Saitama 351-0193 (JP); IWAMOTO, J., c/o HONDA GIJUTSU KENKYUSHO, Wako-shi, Saitama 351-0193 (JP)
(74) Representative: Paget, Hugh Charles Edward
(86) International application number: PCT/JP2002/013138
(87) International publication number: WO 2003/052301

(56) References cited:
- EP-A2- 0 320 287
- EP-A2- 0 351 498
- EP-A2- 0 355 642
- EP-A2- 0 642 920
- DE-A1- 4 319 142
- JP-A- 4 189 130
- JP-A- 10 157 017
- JP-A- 11 277 670
- JP-A- 2000 025 151
- JP-A- 2003 028 307
- US-A- 5 130 203

## Description

### BACKGROUND OF THE INVENTION

### 1. Field of the Invention

The present invention relates to a metal gasket material plate, more specifically, to a laminated metal gasket material plate provided with a rubber layer on a metal plate thereof.

### 2. Description of the Related Art

A gasket material plate for use in the periphery of an engine to be equipped on a vehicle or the like has been historically formed as a laminated material plates containing asbestos, which was bound by nitrile rubber, phenol resin or the like. However, due to recent regulations against asbestos, a laminated metal gasket plate without provision of asbestos but with a rubber layer on a metal layer through an adhesive layer has been put into use, such as rubber-coated metal disclosed in Japanese Patent Application Laid-Open No. 2 (1990) - 38760.

Incidentally, when a gasket is used in a position such as a gasket inserting portion of an engine where a large temperature variation occurs due to repetitive operations and shutdowns of the engine, such a temperature variation causes fretting in a contact plane between the engine and the gasket. Meanwhile, in particular, a gasket provided with a rubber layer, which is formed by coating an adhesive on a metal plate and further coating fluorinated elastomers, acrylonitrile rubber or the like, has large friction resistance and is therefore hardly slidable because the rubber layer is provided on a surface of the gasket.

Therefore, when the gasket with the surface made of the rubber layer is used in the engine, the above-mentioned fretting incurs large shear stress and a delamination is eventually caused between the metal plate and the adhesive layer. As a result, the gasket incurs a problem of peeling of the rubber layer off the metal plate.

In order to solve the above-described delamination, historically, an aqueous solution containing a chromium compound, phosphoric acid, and silica (for example, a commercially-available coating-type chromating agent such as Surfcoat NRC300TH (trademark) made by Nippon Paint, Co., Ltd. or Zinchrome R1415 (trademark) made by Nihon Parkerizing Co., Ltd.) would be coated on a surface of a metal plate such as an aluminum plate, a steel plate, a galvanized steel plate or the like, by an impregnation method or a roll coating method or the like. Then the aqueous solution on the surface of the metal plate would be dried to form composite coating that would meet an intended purpose.

However, growing concern over environmental issues in recent years demands to minimize burden to the environment caused by surface treatments of gaskets. In particular, a chromate treatment using a chromate compound incurs problems including, adverse effects on the environment attributable to industrial waste discharge or hexavalent chromium, and toxicity to the human body. Therefore, it is indispensable to develop a rubber coating preprocess technology which is not harmful to the environment and to the human body.

### SUMMARY OF THE INVENTION

It is an object of the present invention to provide a chromium-free material, which can improve a delamination resistance property between a metal plate and a rubber layer through an adhesive layer so as to suppress peeling of the rubber layer off the metal plate, and which is also friendly to the environment and the human body.

A metal gasket material plate of the present invention for attaining the foregoing object effectively is a laminated metal gasket material plate provided with a rubber layer on a metal plate through an adhesive layer, which includes silane-based chemical conversion coating being formed between a surface of the metal plate and the adhesive layer by using a silane coupling agent containing any of an epoxy group, a mercapto group, and an amino group as a functional group. Here, the adhesive layer is made of a phenol resin-based adhesive, and the rubber layer is made of an acrylonitrile- butadiene rubber (NBR)-based rubber mixture.

In the metal gasket material plate of the present invention, formed on the surface of the metal plate is the silane-based chemical conversion coating, which is made of the silane coupling agent and exerts excellent adhesion to the metal plate and to the phenol resin-based adhesive because of containing an epoxy group, a mercapto group or an amino group as the functional group therein. Moreover, the adhesive layer made of the phenol resin-based adhesive is formed on the silane-based chemical conversion coating. Furthermore, the rubber layer made of the NBR rubber mixture, which exerts excellent adhesion to the phenol resin-based adhesive, is formed on the adhesive layer. Hence, the rubber layer is tightly fixed to the metal plate through the silane-based chemical conversion coating and the adhesive layer.

Therefore, according to the metal gasket material plate of the present invention, it is possible to adhere the rubber layer to the metal plate as tightly as the case of using the conventional chromating agent, whereby a sufficient delamination resistance can be secured between the metal plate and the rubber layer. In this way, it is possible to surely prevent the rubber layer from peeling off the metal plate.

In addition, according to the metal gasket material plate of the present invention, no chromium oxide compound is used upon the surface treatment of the gasket. Therefore, the metal gasket material plate does not bear the problems of adverse effects on the environment or the toxicity to the human body as described above. Hence it is possible to provide the environment-friendly and human-friendly metal gasket material plate.

Here, in the metal gasket material board of the present invention, a coated amount of the silane coupling agent for forming the silane-based chemical conversion coating may be set in a range between 200 mg/m² and 2000 mg/m² inclusive.

If the coated amount of the silane coupling agent is set less than 200 mg/m², it is difficult to obtain adequate adhesion strength between the metal plate and the rubber layer. If the coated amount exceeds 2000 mg/m², the silane-based chemical conversion coating may be easily cracked upon fabrication of the gasket. However, if the coated amount of the silane coupling agent is controlled in the range between 200 mg/m² and 2000 mg/m² inclusive, it is possible to obtain sufficient adhesion strength between the metal plate and the rubber layer, and also possible to prevent the silane-based chemical conversion coating from being cracked upon fabrication of the gasket using the metal gasket material plate.

### BRIEF DESCRIPTION OF THE DRAWING

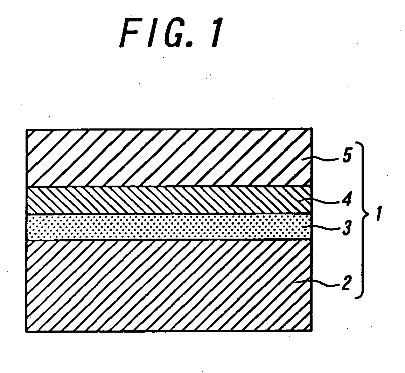

Fig. 1 is a partially enlarged cross-sectional view showing an embodiment of a metal gasket material plate according to the present invention.

### DESCRIPTION OF THE PREFERRED EMBODIMENT

Now, an embodiment of the present invention will be described in detail with reference to the accompanying drawing. Fig. 1 is a cross-sectional view showing a metal gasket material plate of the embodiment in accordance with a metal gasket material plate of the present invention. In the drawing, reference numeral 1 denotes a metal gasket material plate, reference numeral 2 denotes a metal plate, reference numeral 3 denotes silane-based chemical conversion coating, reference numeral 4 denotes an adhesive layer, and reference numeral 5 denotes a rubber layer.

Upon manufacturing the metal gasket material plate 1 of this embodiment, on a surface of the metal plate (for example, a stainless steel plate such as SUS301H) 2, a silane coupling agent containing an epoxy group, a mercapto group or an amino group as a functional group is coated with a roll coater, for example, so that a coated amount thereof is set in a range between 200 mg/m² and 2000 mg/m² inclusive. The silane-based chemical conversion coating 3 is formed on the surface of the metal plate 2 by heating and thereby drying the silane coupling agent. On the silane-based chemical conversion coating 3, a phenol resin-based adhesive is coated with a roll coater, for example. Then, the adhesive layer 4 is formed on the surface of the silane-based chemical conversion coating 3 by heating and thereby drying the phenol resin-based adhesive. Moreover, an unvulcanized synthetic rubber mixture based on acrylonitrile butadiene rubber (NBR) is coated on the adhesive layer 4 made of the phenol resin-based adhesive, and the rubber layer 5 is formed by vulcanization and thereby hardening the synthetic rubber mixture.

In the metal gasket material plate 1 of this embodiment, the silane-based chemical conversion coating 3, which is made of the silane coupling agent having excellent adhesion to the metal plate 2 and to the phenol resin-based adhesive because of containing an epoxy group, a mercapto group or an amino group as the functional group, is provided on the surface of the metal plate 2. Moreover, the adhesive layer 4 made of the phenol resin-based adhesive is formed on the silane-based chemical conversion coating 3. Then, the rubber layer 5, which is made of the NBR-based rubber mixture having excellent adhesion to the phenol resin-based adhesive, is formed on the adhesive layer 4. Accordingly, the rubber layer 5 is tightly fixed to the metal plate 2 through the silane-based chemical conversion coating 3 and the adhesive layer 4.

Therefore, according to the metal gasket material plate 1 of this embodiment, it is possible to adhere the rubber layer 5 to the metal plate 2 as tightly as the case of using a conventional chromating agent, whereby a sufficient delamination resistance can be secured between the metal plate 2 and the rubber layer 5. In this way, it is possible to surely prevent the rubber layer 2 from peeling off the metal plate5 by fretting or the like.

In addition, according to the metal gasket material plate 1 of this embodiment, no chromium oxide compound is used upon the surface treatment of the gasket. Therefore, the metal gasket material plate 1 does not bear the problems of adverse effects on the environment or the toxicity to the human body as described above. Hence it is possible to provide the environment-friendly and human-friendly metal gasket material plate.

Furthermore, according to the metal gasket material plate 1 of this embodiment, the coated amount of the silane coupling agent is set in the range between 200 mg/m² and 2000 mg/m² inclusive. Therefore, it is possible to obtain sufficient adhesion strength between the metal plate 2 and the rubber layer 5, and also possible to prevent the silane-based chemical conversion coating 3 from being cracked upon fabrication of the gasket by use of the metal gasket material plate.

### Examples

Next, description will be made regarding three examples with different types of the silane coupling agents for the silane-based chemical conversion coating 3, seven comparative examples with different conditions from the foregoing examples, and a conventional example provided with phosphate-containing chromate coating instead of the silane-based chemical conversion coating 3. Here, provided is a thermal degradation after temperature cycle test (a thermal degradation test) with an actual engine in which each of the metal gaskets made of relevant material plates is embedded into a sealing space between a cylinder head of an engine and an intake manifold, and then expansion by heating and contraction by cooling in that state are repeated for a predetermined number of times. Then, adhesion strengths of the respective rubber layers and sealing performances of the respective metal gaskets after the thermal degradation tests are severally obtained and compared.

Specifically, in a metal gasket material plate 1 of Example 1, a stainless steel plate (SUS301H) is applied as a metal plate 2. Then, amino-containing silane-based chemical conversion coating 3 is formed on a surface of the metal plate 2 by use of a silane coupling agent containing an amino group. Thereafter, a phenol-based adhesive layer 4 is formed on the silane-based chemical conversion coating 3 by use of a phenol-based adhesive. Further, an NBR rubber layer 5 is formed on the phenol resin-based adhesive layer 4 by use of an NBR-based synthetic rubber mixture.

Meanwhile, in a metal gasket material plate 1 of Example 2, a stainless steel plate (SUS301H) is applied as a metal plate 2. Then, epoxy-containing silane-based chemical conversion coating 3 is formed on a surface of the metal plate 2 by use of a silane coupling agent containing an epoxy group. Thereafter, a phenol-based adhesive layer 4 is formed on the silane-based chemical conversion coating 3 by use of a phenol resin-based adhesive.
Further, an NBR rubber layer 5 is formed on the phenol-based adhesive layer 4 by use of an NBR-based synthetic rubber mixture.

Moreover, in a metal gasket material plate 1 of Example 3, a stainless steel plate (SUS301H) is applied as a metal plate 2. Then, mercapto-containing silane-based chemical conversion coating 3 is formed on a surface of the metal plate 2 by use of a silane coupling agent containing a mercapto group. Thereafter, a phenol-based adhesive layer 4 is formed on the silane-based chemical conversion coating 3 by use of a phenol resin-based adhesive.
Further, an NBR rubber layer 5 is formed on the phenol-based adhesive layer 4 by use of an NBR-based synthetic rubber mixture.

On the contrary, in a metal gasket material plate of Comparative Example 1, a phenol-based adhesive layer made of a phenol resin-based adhesive is formed directly on a surface of a stainless steel plate (SUS301H) used as a metal plate without formation of chemical conversion coating. Then, an NBR rubber layer is formed on the phenol-based adhesive layer by use of an NBR-based synthetic rubber mixture.

Meanwhile, in a metal gasket plate of Comparative Example 2, amino-containing silane-based chemical conversion coating is formed on a surface of a stainless steel plate (SUS301H) as a metal plate by use of a silane coupling agent containing an amino group. Then, an NBR rubber layer 5 is formed directly on the silane-based chemical conversion coating by use of an NBR-based synthetic rubber mixture without formation of an adhesive layer.

In the meantime, in a metal gasket plate of Comparative Example 3, epoxy-containing silane-based chemical conversion coating is formed on a surface of a stainless steel plate (SUS301H) as a metal plate by use of a silane coupling agent containing an epoxy group. Then, an NBR rubber layer 5 is formed directly on the silane-based chemical conversion coating by use of an NBR-based synthetic rubber mixture without formation of an adhesive layer.

Moreover, in a metal gasket plate of Comparative Example 4, mercapto-containing silane-based chemical conversion coating is formed on a surface of a stainless steel plate (SUS301H) as a metal plate by use of a silane coupling agent containing a mercapto group. Then, an NBR rubber layer 5 is formed directly on the silane-based chemical conversion coating by use of an NBR-based synthetic rubber mixture without formation of an adhesive layer.

Furthermore, in a metal gasket plate of Comparative Example 5, vinyl-containing silane-based chemical conversion coating is formed on a surface of a stainless steel plate (SUS301H) as a metal plate by use of a vinyl-containing silane coupling agent. Thereafter, a phenol-based adhesive layer is formed on the silane-based chemical conversion coating by use of a phenol resin-based adhesive, and then an NBR rubber layer is formed on the phenol-based adhesive layer by use of an NBR-based synthetic rubber mixture.

Meanwhile, in a metal gasket plate of Comparative Example 6, methacryloxy-containing silane-based chemical conversion coating is formed on a surface of a stainless steel plate (SUS301H) as a metal plate by use of a methacryloxy-containing silane coupling agent. Thereafter, a phenol-based adhesive layer is formed on the silane-based chemical conversion coating by use of a phenol resin-based adhesive, and then an NBR rubber layer is formed on the phenol-based adhesive layer by use of an NBR-based synthetic rubber mixture.

Moreover, in a metal gasket plate of Comparative Example 7, isocyanate-containing silane-based chemical conversion coating is formed on a surface of a stainless steel plate (SUS301H) as a metal plate by use of an isocyanate-containing silane coupling agent. Thereafter, a phenol-based adhesive layer is formed on the silane-based chemical conversion coating by use of a phenol resin-based adhesive, and then an NBR rubber layer is formed on the phenol-based adhesive layer by use of an NBR-based synthetic rubber mixture.

Here, the silane coupling agents used in the above-described Examples 1 to 3 and in Comparative Examples 2 to 7 are silane coupling agents made by Shin-Etsu Chemical Co., Ltd. The trademark for the amino-containing silane coupling agent is KBM603. The trademark for the epoxy-containing silane coupling agent is KBM403. The trademark for the mercapto-containing silane coupling agent is KBM803. The trademark for the vinyl-containing silane coupling agent is KBM1003. The trademark for the methacryloxy-containing silane coupling agent is KBM503. Finally, the trademark for the isocyanate-containing silane coupling agent is KBP44.

In addition, in a metal gasket material plate of Conventional Example, phosphate-containing chromate chemical conversion coating is formed on a surface of a stainless steel plate (SUS301H) as a metal plate by use of a phosphate-containing chromate coupling agent. Thereafter, a phenol-based adhesive layer is formed on the chromate chemical conversion coating by use of a phenol resin-based adhesive, and then an NBR rubber layer is formed on the phenol-based adhesive layer by use of an NBR-based synthetic rubber mixture.

The following Table 1 shows results of comparison among the three examples, the seven comparative examples and the conventional chromate-containing example, which are obtained in terms of the adhesion strengths of the respective rubber layers and the sealing performances after the thermal degradation tests. As it is obvious from Table 1, Examples 1 to 3 include two-digit integers in measured values regarding the adhesion strengths. Therefore, it is confirmed that Examples 1 to 3 exert adhesion almost as strong as or slightly less than Conventional Example in spite of the chromium-free treatments. Meanwhile, Comparative Examples 1 to 7 include only one-digit integers in the measured values regarding the adhesion strengths. Therefore, it is confirmed that Comparative Examples 1 to 7 exert considerably less adhesion strengths than Conventional Example. In addition, regarding the sealing performances after the temperature cycle tests, Examples 1 to 3 severally show withstanding pressures of 3.5 kgf/cm², and are thereby confirmed to exert sufficient sealing durability in spite of the chromium-free treatments. Meanwhile, Comparative Examples 1 to 7 severally show withstanding pressures of 0 kgf/cm², and are thereby confirmed that the sealing performances are degraded because of delamination of the rubber layers after the temperature cycle tests.

**Table 1**

| Remarks | Silane-based chemical conversion coating | | Adhesive type | Rubber layer | Adhesion strength (MPa) | Sealing performance after thermal degradation test (kgf/cm²) |
|---|---|---|---|---|---|---|
| | Type | Coated amount (mg/m²) | | | | |
| Example 1 | amino | 500 | phenol | NBR | 18.8 | 3.5 |
| Example 2 | epoxy | 500 | phenol | NBR | 17.2 | 3.5 |
| Example 3 | mercapto | 500 | phenol | NBR | 12.5 | 3.5 |
| Comparative Example 1 | none | 0 | phenol | NBR | 3.6 | 0 |
| Comparative Example 2 | amino | 500 | none | NBR | 4.1 | 0 |
| Comparative Example 3 | epoxy | 500 | none | NBR | 4.0 | 0 |
| Comparative Example 4 | mercapto | 500 | none | NBR | 4.5 | 0 |
| Comparative Examples 5 | vinyl | 500 | phenol | NBR | 4.2 | 0 |
| Comparative Example 6 | methacryloxy | 500 | phenol | NBR | 3.9 | 0 |
| Comparative Example 7 | isocyanate | 500 | phenol | NBR | 3.8 | 0 |
| Conventional Example | phosphate-containing chromate | 100 | phenol | NBR | 19.8 | |

| | | | | | | |
|---|---|---|---|---|---|---|
| Note: Evaluation method of the adhesion strengths complies with JIS K 6850. | | | | | | |

## Claims

1. A metal gasket material plate (1) in a laminated state being provided with a rubber layer (5) on a metal plate (2) through an adhesive layer (4), the metal gasket material plate comprising:
silane-based chemical conversion coating (3) being provided between a surface of the metal plate (2) and the adhesive layer (4), the silane-based chemical conversion coating (3) being formed by using a silane coupling agent containing any of an epoxy group, a mercapto group, and an amino group as a functional group,
wherein the adhesive layer (4) is made of a phenol resin-based adhesive, and
the rubber layer (5) is made of an NBR-based rubber mixture.

2. The metal gasket material plate (1) according to claim 1, wherein a coated amount of the silane coupling agent for forming the silane-based chemical conversion coating (3) is set in a range between 200 mg/m² and 2000 mg/m² inclusive.

## Patentansprüche

1. Metalldichtungsmaterialplatte (1) in laminiertem Zustand, die mit einer Kautschukschicht (5) auf einer Metallplatte (2) durch eine Kleberschicht (4) bereitgestellt ist, wobei die Metalldichtungsmaterialplatte Folgendes umfasst:
eine chemisch aufgebrachte Beschichtung auf Silanbasis (3), die zwischen einer Oberfläche der Metallplatte (2) und der Kleberschicht (4) bereitgestellt Ist, wobei die chemisch aufgebrachte Beschichtung auf Silanbasis (3) durch Verwendung eines Silanhaftmlttels, das eine beliebige aus einer Epoxygruppe, einer Mercaptogruppe und einer Aminogruppe als funktionelle Gruppe enthält, ausgebildet ist,
worin die Kleberschicht (4) aus einem Kleber auf Phenolharzbasis hergestellt ist und die Kautschukschicht (5) aus einem Kautschukgemisch auf NBR-Basis hergestelit ist.

2. Metalldichtungsmaterialplatte (1) nach Anspruch 1, worin eine beschichtete Menge des Silanhaftmittels zur Ausbildung der chemisch aufgebrachten Beschichtung auf Silanbasis (3) in einem Bereich von 200 mg/m² bis 2.000 mg/m² liegt.

## Revendications

1. Plaque métallique de matériau d'étanchéité (1) dans un état laminé munie d'une couche de caoutchouc (5) sur une plaque métallique (2) par une couche adhésive (4), la plaque métallique de matériau d'étanchéité comprenant;
un revêtement de conversion chimique à base de silane (3) étant réalisé entre une surface de la plaque métallique (2) et la couche adhésive (4), le revêtement de conversion chimique à base de silane (3) étant formé en utilisant un agent de couplage de silane contenant l'un quelconque parmi un groupe époxy, un groupe mercapto et un groupe amino comme groupe fonctionnel,
où la couche adhésive (4) est réalisée en un adhésif à base de resine de phénol, et la couche de caoutchouc (5) est réalisée en un mélange de caoutchouc à base de NBR.

2. Plaque métallique de matériau d'étanchéité (1) selon la revendication 1, où une quantité de revêtement de l'agent de couplage de silane pour former le revêtement de conversion chimique à base de silane (3) est établie dans une plage entre 200 mg/m² et 2000 mg/m² inclusive.
